# EUROPEAN PATENT APPLICATION

(11) **EP 1 480 428 A2**
(43) Date of publication of application: **24.11.2004**
(21) Application number: 04011970.3
(22) Date of filing: 19.05.2004
(51) Int. Cl.: H04M 3/493, G10L 15/28, G10L 13/04

(54) **Voice response system**

(30) Priority: 19.05.2003 JP 2003140682
(71) Applicant: NEC CORPORATION, Tokyo (JP)
(72) Inventor: Fujiwara, Yuh, c/o NEC Corp., Tokyo (JP)
(74) Representative: Betten & Resch

(57) **Abstract**

To provide a voice response system, which is capable of easily and quickly generating voice data according to test data from a device such as a maintenance terminal 20. A voice accumulation response unit 10 receives text data and various main control data from a maintenance terminal 20, generates and transmits the voice data responsive to a voice request from the upper rank unit 30. The voice accumulation response unit 10 includes a voice storage equipment 11, a text storage equipment 12, a text reader 13 and a voice output controller 14. The voice storage equipment 11 stores voice data from the text reader 13 or the maintenance terminal 20. The text storage equipment 12 stores text data from the maintenance terminal 20. The text readier 13 can convert text data to voice data.

## Description

### BACKGROUND OF THE INVENTION

This application claims benefit of Japanese Patent Application No. 2003-140682 filed on May 19, 2003, the contents of which are incorporated by the reference.

The present invention relates to voice response systems and, more particularly, to a voice response system which transmits voice data to the upper rank unit according to a voice request form the upper rank unit.

Personal computers have been broadly spread, and presently they are indispensable electronic appliances not only in offices but also in home. Voice response systems are used for connecting various data processing units such as personal computers and voice response units to one another and having data generated in such processing units to be reported to operators (or users) by converting the data to voice.

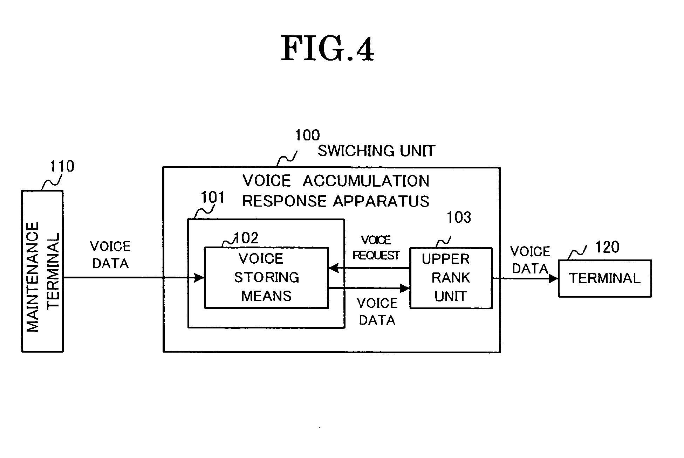

Fig. 4 is a block diagram showing a usual prior art voice response system. This voice response unit is constituted by a switching unit 100 connected between a maintenance terminal 110 and each terminal 120. The switching unit 100 is constituted by a voice accumulation response unit 101 including a voice storing means 102 and an upper rank unit 103.

When voice data is inputted from the maintenance terminal 110 to the voice storing unit 102 in the switching unit 100, the voice storing means 102 stores this voice data. When the voice storing means 102 receives a voice request from the upper rank unit 103, the voice storing means 102 transmits voice data to the upper rank unit 103. The maintenance terminal 110 and the switching unit 100 may be spaced apart by any distance, either short or long.

Prior art techniques of such voice response system are disclosed in various literatures. An example the disclosed voice response system can be connected to a data processing unit such as a personal computer and effective to report detailed telegraphic messages in voice by merely adding some functions to the existing unit (see Literature 1: Japanese Patent Laid-Open 2000-125032, for example). Another disclosure example is a telephone voice response unit, which permits starting a program permitting the start of a service for ready data provision or retrieval in terms of voice responses by merely producing a text input/output program (see Literature 2: Japanese Patent Laid-Open 2002-44258, for example). As a further disclosure example, a voice response system and a voice response unit are shown, which permits real time switching registered voice without interrupting on-line service (see Literature 3: Japanese Patent Laid-Open Hei 8-160984, for example).

In the above prior art techniques, however, the voice storing means has no function of producing voice data from text data. Therefore, a maintenance terminal has to prepare voice data whenever a response voice change is made, and it is impossible to make real-time response voice change of an urgent announcement or the like. Also, since a voice storing means has no function of generating voice data from text data, transmission of voice data to the voice storing means is necessary, thus increasing the traffics between the maintenance terminal and the voice storing unit.

### SUMMARY OF THE INVENTION

The present invention was made in view of the above problem inherent in the prior art, and its object is to provide voice response system, which can solve or alleviate problems.

According to an aspect of the present invention, there is provided a voice response system for transmitting data from a device based on a request from an upper rank unit, comprising: a text storage equipment that stores text data received from the device therein; a text reader that generates voice data from the text data received from the test storing means; a voice storage equipment that stores voice data from the text reading means; and a voice output controller that transmits a control signal to the text storing means and text reading means according to the control signal received from the device.

The voice response system further comprises a voice character control data storage equipment that receives the voice character control data from the device and transmits the voice character control data to the text reader.

The voice character control data transmitted to the voice character control data storage equipment is used to control voice color such as whether the voice is of a man or a woman or control the intonation. The voice storage equipment also stores the voice data directly transmitted from the device. The upper rank unit transmits a voice request to the voice storage equipment, and also transmits voice data to the upper rank unit according to the voice request. The upper rank system transmits a voice request to the voice output controller, and the text reader directly transmits the voice data to the upper rank unit. The device is a maintenance terminal.

According to another aspect of the present invention, there is provided a voice response method for transmitting data from a device based on a request from an upper rank unit, comprising steps of: storing text data received from the device; generating voice data from the text data received from a text storage equipment; storing voice data from a text reader; and transmitting a control signal to a text storage equipment and a text reader according to the control signal received from the device. The device is a maintenance terminal.

Other objects and features will be clarified from the following description with reference to attached drawings.

### BRIEF DESCRIPTION OF THE DRAWINGS

Fig. 1 is a block diagram showing the arrangement of a first embodiment of the voice response system according to the present invention;
Fig. 2 is a block diagram showing the system arrangement of a second embodiment of the voice response system according to the present invention;
Fig. 3 is a block diagram showing the system arrangement of a third embodiment of the voice response system according to the present invention; and
Fig. 4 is a block diagram showing a usual prior art voice response system.

### PREFERRED EMBODIMENTS OF THE INVENTION

Preferred embodiments of the present invention will now be described with reference to the drawings.

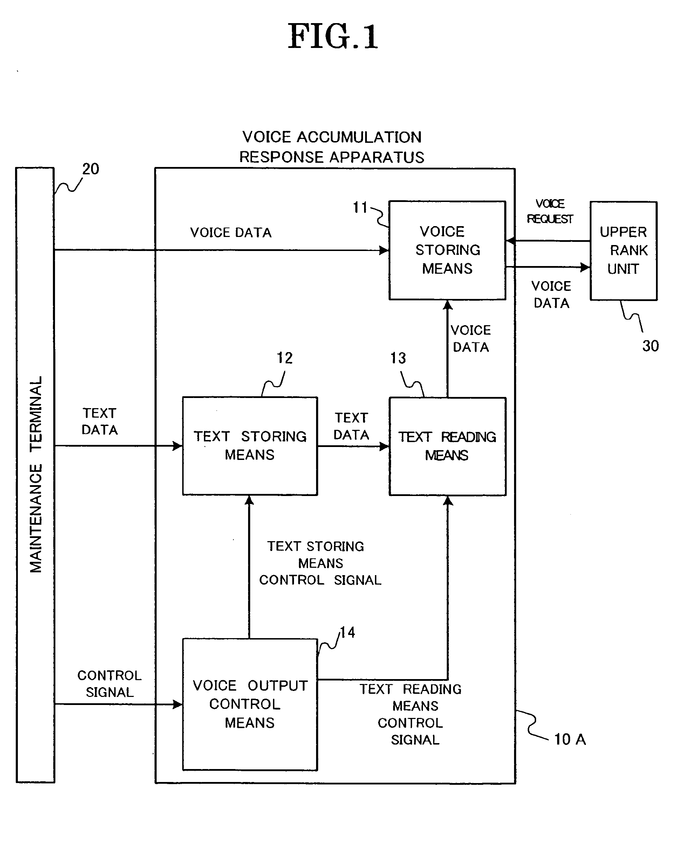

Fig. 1 is a block diagram showing the arrangement of a first embodiment of the voice response system according to the present invention. This voice response system is constituted by a voice accumulation response unit 10A, a maintenance terminal 20 and an upper rank unit 30. The voice accumulation response unit 10A includes a voice storing means 11, a text storing means 12, a text reading means 13 and a voice output control means 14.

In the voice response system shown in Fig. 1, the maintenance terminal 20 transmits voice data, text data and control signal to the voice storing means 11, the text storing means 12 and the voice output control means 14, respectively, of the voice accumulation response unit 10A. The voice output control means 14 transmits a text storing means control signal and a text reading means control signal to the test storing means 12 and the text reading means 13, respectively. The text storing means 12 transmits text data to the text data reading means 13. The text reading means 13 transmits voice data to the voice storing means 11. The voice storing means 11 transmits the voice data to the upper rank unit 30 and receives a voice request therefrom.

The text storing means 12 stores text data received from the maintenance terminal 20. When the text storing means 12 receives the text storing means control signal from the voice output control means 14, it transmits the text data stored therein to the text reading means 13. When the text reading means 13 receives the text reading means control signal from the voice output control means 14, it converts the text data received from the text storing means 12 to the voice data, and transmits this voice data to the voice storing means 11.

The voice output control means 14 transmits the text storing means control signal to the text storing means 12 according to control signal received from the maintenance terminal 20. The voice output control means 14 can also transmit the text reading means control signal to the text reading means 13 according to control signal received from the maintenance terminal 20. The voice storing means 11 stores the voice data received from the maintenance terminal 20 and also stores the voice data received from the text reading means 13. When the voice storing means 11 receives the voice request from the upper rank unit 30, it transmits the voice data stored therein to the upper rank unit 30. The upper rank unit 30 transmits the voice request to the voice storing means 11 and receive the voice data therefrom.

As shown above, since in this voice response system the text reading means 13 produces or generates voice data from text data and transmit this text data to the voice storing means 11, response voice is produced and stored according to text data input from the maintenance terminal 20, and the voice data or the response voice is outputted according to the voice request from the upper rank unit 30.

Detailed operations of the voice accumulation response unit 10A shown in Fig. 1 will now be described. When the maintenance terminal 20 transmits the text data to the text storing means 12, the text storing means 12 receiving this text data stores the data therein. The maintenance terminal 20 also transmits a control signal to the voice output control means 14. The voice output control means 14 receiving the control signal transmits a text storing means control signal and a text reading means control signal to the text storing means 12 and the text reading means 13, respectively.

The text storing means 12 receiving the text data and the text storing means control signal, transmits text data stored therein to the text reading means 13. The text reading means 13 receiving the text data and the text reading means control signal, converts the text data to voice data and transmits this voice data to the voice storing means 11. The voice storing means 11 receiving the voice data stores the data therein. It is also possible to directly input the voice data from the maintenance terminal 20 to the voice storing means 11. Again in this case, the voice storing means 11 stores the received voice data therein. When a voice request is transmitted from the upper rank unit 30 in this state, the voice storing means 11 transmits the voice data stored therein to the upper rank unit 30.

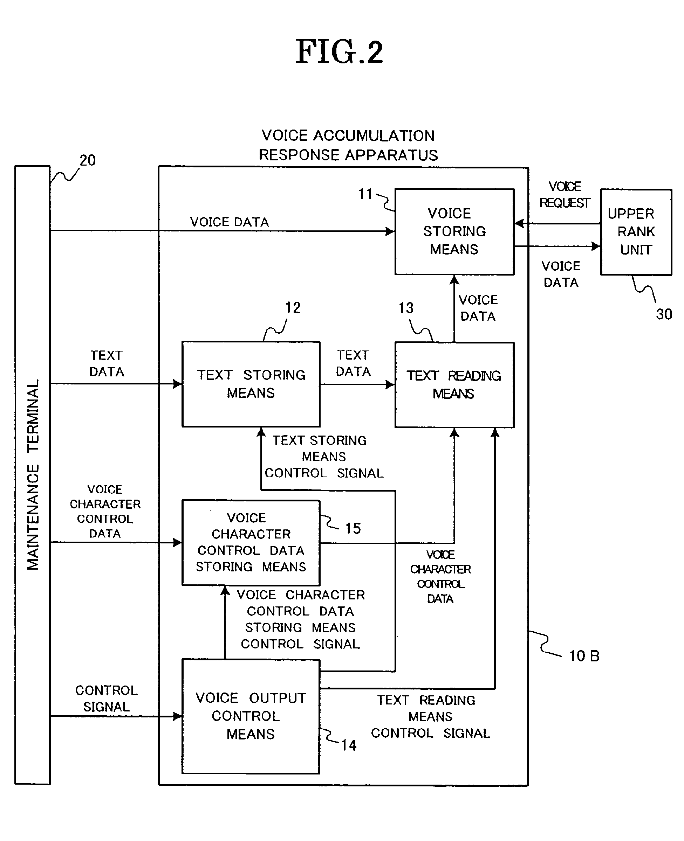

A different embodiment of the voice response system according to the present invention will now be described. Fig. 2 is a block diagram showing the system arrangement of a second embodiment of the voice response system according to the present invention. For the brevity sake, like constituent parts of elements are designated by like reference numerals.

The Fig. 2 voice response system is constituted by a voice accumulation response unit 10B, a maintenance terminal 20 and an upper rank unit 30. The voice accumulation response unit 10B includes a voice storing means 11, a test storing means 12, a text reading means 13, a voice output control means 14 and a voice character control data storing means 15. The maintenance terminal 20 transmits voice data, text data, control signal and vice character control data to the voice storing means 11, text storing means 12, voice output control means 14 and voice character control data storing means 15, respectively, of the voice accumulation response unit 10B.

In the voice accumulation response unit 10B, the voice output control means 14 transmits a text storing means control signal, a text reading means control signal and a voice character control data storing means control signal to the text storing means 12, the text reading means 13 and the voice character control data storing means 15, respectively. The text storing means 12 and the voice character control data storing means 15 transmits text data and voice character control data, respectively, to the text reading means 13. The text reading means 13 transmits voice data to the voice storing means 11. The voice storing means 11 transmits the voice data to the upper rank unit 30 and receives a voice request therefrom.

In the voice response system shown in Fig. 2, the text storing means 12 stores text data received from the maintenance terminal 20. When the text storing means 12 receives the text storing means control signal from the voice output control means 14, it transmits the text data stored therein to the text reading means 13. The voice character control data storing means 15 stores the voice character control data received from the maintenance terminal 20. When the voice character control data storing means 15 receives the voice character control data storing means control signal from the voice output control means 14, it transmits the voice character control data to the text reading means 13.

When the voice output control means 14 receives a control signal from the maintenance terminal 20, it transmits the test storing means control signal to the text storing means 12. Also, when the voice output control means 14 receives a control signal from the maintenance terminal 20, it transmits the voice character control data storing means control signal to the voice character control data storing means 15. Furthermore, when the voice output control means 14 receives a control signal from the maintenance terminal 20, it transmits the text reading means control signal to the text reading means 13. When the text reading means 13 receives the text reading means control signal from the voice output control means 14, it generates the voice data from the text data received from the text storing means 12 and the voice character control data received from the voice character control data storing means 15 and transmits the generated voice data to the voice storing means 11.

The voice storing means 11 stores the voice data received from the maintenance terminal 20 or the text reading means 13. When the voice storing means 11 receives a voice request from the upper rank unit 30, it transmits the voice data stored therein to the upper rank unit 30. The upper rank unit 30 then transmits a voice request to the voice storing means 11 and receives the voice data from the voice storing means 11.

Now, the overall operation of the voice response system shown in Fig. 2 will be described. When the maintenance terminal 20 transmits the text data to the text storing means 12, the text storing means 12 stores the received text data therein. When the maintenance terminal 20 transmits the voice character control data to the voice character control data storing means 15, the voice character control data storing means 15 stores the received voice character control data. When the maintenance terminal 20 transmits a control signal to the voice output control means 14, the voice output control means 14 receiving this control signal transmits the text storing means control signal, the voice character control data storing means control signal and the text reading means control signal to the text storing means 12, the voice character control data storing means 15 and the text reading means 13, respectively.

The text storing means 12 receiving the text storing means control signal transmits the text data stored therein to the text reading means 13. The voice character control data storing means 15 receiving the voice character control data storing means control signal transmits the voice character control data stored therein to the text reading means 13. The text reading means 13 receiving the text data, the voice character control data and the text reading means control signal, generates the voice data according to the text data and the voice character control data, and transmits the generated voice data to the voice storing means 11. The voice storing means 11 receiving the voice data stores this data therein. It is also possible to cause direct inputting of the voice data to the maintenance terminal 20. Again in this case, the voice storing means 11 receiving the voice data stores this data therein. When a voice request is transmitted from the upper rank unit 30, the voice storing means 11 receiving the request transmits the voice data stored therein to the upper rank unit 30.

In the second embodiment of the voice response system shown in Fig. 2, in which the voice character control data storing mean 15 is provided and it is adapted that the maintenance terminal 20, the voice output control means 14 and the text reading means 13 deal with the voice character control data, it is possible to designate the voice character, which is provided in converting the text data to the voice data. Here, by the term "voice character" is meant such data as voice tones of man's and woman's voices, high and low pitch voices and intonation.

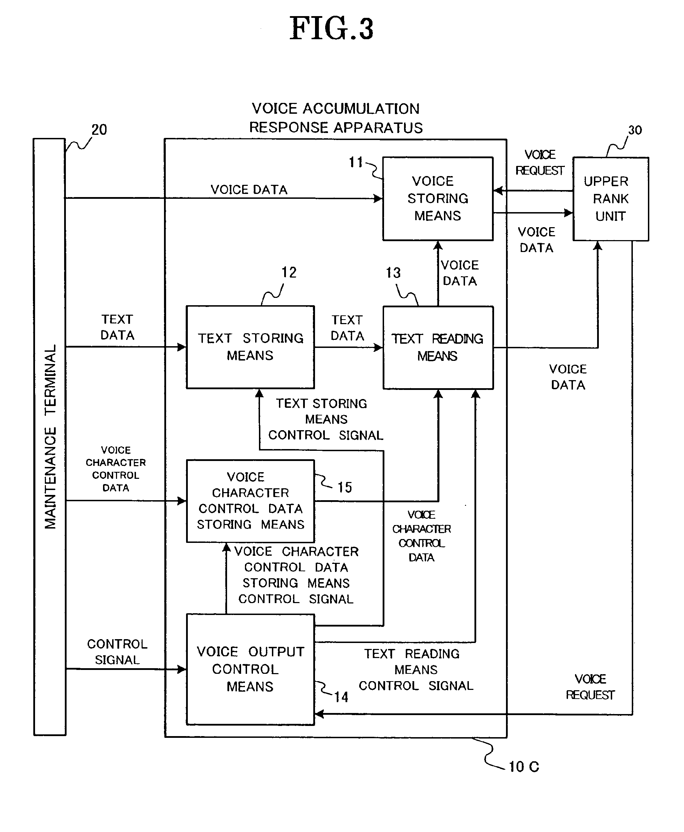

A further embodiment of the voice response system according to the present invention will be described. Fig. 3 is a block diagram showing the system arrangement of a third embodiment of the voice response system according to the present invention. The voice response system shown in Fig. 3 is similar to the voice response system shown in Fig. 2, and like constituent elements are designated by like reference numerals. This voice response system is constituted by a maintenance terminal 20, a voice accumulation response unit 10C and the upper rank unit 30. The voice accumulation response unit 10C includes a voice storing means 11, a test storing means 12, a text reading means 13, a voice output control means 14 and a voice character control data storing means 15.

The maintenance terminal 20 serves to transmit the voice data, the text data, control signal and the voice character control data to the voice storing means 11, the text storing means 12, the voice output control means 14 and the voice character control data storing means 15, respectively, to the voice accumulation response unit 10C. The voice output control means 14 serves to transmit the text storing means control signal, the text reading means control signal and the voice character control data storing means control signal to the text storing means 12, the text reading means 13 and the voice character control data storing means 15, respectively, and receives a voice request from the upper rank unit 30. To the text reading means 13 can be transmitted, in addition to the text reading means control signal, the test data and the voice character control data from the text storing means 12 and the voice character control data storing means 15, respectively. The text reading means 13 serves to transmit the voice data to the voice storing means 11 and the upper rank unit 30. The voice storing means 11 serves to transmit the voice data to the upper rank nit 30 and receive a voice request from the upper rank unit 30.

In the response system shown in Fig. 3 the text storing means 12 stores the text data received from the maintenance terminal 20. When the text storing means 12 receives the text storing means control signal from the voice output control means 14, it transmits the text data stored therein to the text reading means 13. The voice character control data storing means 15 stores the voice character control data received from the maintenance terminal 20 therein. When the voice character control data storing means 15 receives the voice character control data storing means control signal from the voice output control means 14, it transmits the voice character control data to the text reading means 13.

When the voice output control means 14 receives a control signal from the maintenance terminal 20, it transmits the text storing means control signal to the text storing means 12. In response to receipt of the control signal, the voice character data storing means control signal is transmitted to the voice character control data storing means 15. In response to receipt of the control signal, the text reading means control signal is transmitted to the text reading means 13. Also, responsive to receipt of a voice request from the upper rank unit 30, the text storing means control signal is transmitted to the text storing means 12. Furthermore, responsive to receipt of the voice request from the upper rank unit 30, the voice character control data storing means control signal is transmitted to the voice character control data storing means 15. In response to receipt of the voice request, the text reading means control signal is transmitted to the text reading means 13.

When the text reading means 13 receives the text reading means control signal from the voice output control means 14, it generates voice data from the text data receives from the text storing means 12 and the voice character control data received from the voice character control data storing means 15, and transmits this voice data to the voice storing means 11. Also, when the text reading means 13 receives the text reading means control signal from the voice output control means 14, it generates voice data from the text data received from the text storing means 12 and the voice character control data received from the voice character control data storing means 15 and transmits the voice data to the upper rank unit 30. The voice storing means 11 stores the voice data received from the maintenance terminal 20 or the text reading means 13 therein. Furthermore, when the voice storing means 11 receives a voice request from the upper rank unit 30, it transmits the voice data stored therein to the upper rank unit 30. The upper rank unit 30 transmits a voice request to the voice storing means 11, and receives the voice data from the voice storing means 12. The upper rank unit 30 transmits a voice request to the voice storing means 11 and receives the voice data for the voice storing means 11. The upper rank unit 30 transmits a voice request to the voice output control means 14 and receives the voice data from the text reading means 13.

Now, the overall operation of the embodiment shown in Fig. 3 will be described. When the maintenance terminal 20 transmits the text data to the text storing means 12, the text storing means 12 stores the received text data therein. When the maintenance terminal 20 transmits the voice character control data to the voice character control data storing means 15, the voice character control data storing means 15 stores the received voice character control data therein. When the maintenance terminal 20 transmits the control signal to the voice output control means 14, the voice output control means 14 receiving this control signal transmits the text storing means control signal, the voice character control data storing means control signal and the text reading means control signal to the text storing means 12, the voice character control data storing means 15 and the text reading means 13, respectively.

The text storing means 12 receiving the text storing means control signal transmits the text data stored therein to the text reading means 13. The voice character control data storing means 15 receiving the voice character control data storing means control signal transmits the voice character control data stored therein to the text reading means 13. The text reading means 13 receiving the text data, the voice character control data and the text reading means control signal, generates the voice data on the basis of the text data and the voice character control data, and transmits the generated voice data to the voice storing means 11. The voice storing means 11 stores the received voice data.

It is possible as well to let the voice data be directly inputted from the maintenance terminal 20 to the voice storing means 11. The voice storing means 11 also stores the received voice data. When the voice request is transmitted for the upper rank unit 30, the voice storing means 11 receiving the voice request transmits the voice data stored therein to the upper rank unit 30. In case when the upper rank unit 30 transmits the voice request not to the voice storing means 11 but to the voice output control means 14, the voice output control means 14 receiving this voice request transmits the text storing means control signal, the voice character control data storing means control signal and the text reading means control signal to the text storing means 12, the voice character control data storing means 15 and the text reading means 13, respectively.

The text storing means 12 receiving the text storing means control signal transmits the text data stored therein to the text reading means 13. The voice character control data storing means 15 receives the voice character control data storing control signal and the stored voice character data to the text reading means 13. The text reading means 13 receiving the text data, the voice character control data and the text reading means control signal generates voice data on the basis of the text data and the voice character control data, and transmits this voice data to the upper rank unit 30.

In the arrangement of the voice response system shown in Fig. 3, the upper rank unit 30 can transmits the voice request to the voice output control means 14, and also the text reading means 13 can receive the voice data from the text reading means 13. Also, the voice output control means 14 can receive the voice request from the upper rank unit 30 and transmit the text storing means control signal, the voice character control data storing means control signal and the text reading means control signal to the text storing means 12, the voice character control data storing means 15 and the text reading means 13, respectively. Furthermore, the text reading means 13 can receive the text data, the voice character control data and the text reading means control signal, form voice data on the basis of the text data and the voice character control data, and transmit the voice data to the upper rank unit 30. Thus, it is possible to transmit voice data to the upper rank unit 30 without the voice data but with accumulation of only the text data and voice character control data for reducing the required memory quantity.

As has been described in the foregoing, with the voice response system according to the present invention it is possible to obtain the following pronounced practical effects. In the first place, since voice data can be stored in the voice storing means by the text data transmission from the maintenance terminal, it is possible to reduce time which was otherwise required for the generation of voice data with the distribution of studios and professional announcers and so forth, and also it is possible to quickly change the response voice.

Secondly, since voice data can be stored in the voice storing means with the text data transmission from the maintenance terminal, it is possible to delete a great deal of traffics which were heretofore resulted from the transmission of large size voice data from the maintenance terminal to the voice storing means.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

According to an embodiment, a voice response system is provided, which is capable of easily and quickly generating voice data according to test data from a device such as a maintenance terminal 20. A voice accumulation response unit 10 receives text data and various main control data from a maintenance terminal 20, generates and transmits the voice data responsive to a voice request from the upper rank unit 30. The voice accumulation response unit 10 includes a voice storage equipment 11, a text storage equipment 12, a text reader 13 and a voice output controller 14. The voice storage equipment 11 stores voice data from the text reader 13 or the maintenance terminal 20. The text storage equipment 12 stores text data from the maintenance terminal 20. The text readier 13 can convert text data to voice data.

## Claims

1. A voice response system for transmitting data from a device based on a request from an upper rank unit, comprising:
a text storage equipment that stores text data received from the device therein;
a text reader that generates voice data from the text data received from the test storing means;
a voice storage equipment that stores voice data from the text reading means; and
a voice output controller that transmits a control signal to the text storing means and text reading means according to the control signal received from the device.

2. The voice response system according to claim 1, further comprising a voice character control data storage equipment that receives the voice character control data from the device and transmits the voice character control data to the text reader.

3. The voice response system according to claim 2, wherein the voice character control data transmitted to the voice character control data storage equipment is used to control voice color such as whether the voice is of a man or a woman or control the intonation.

4. The voice response system according to one of claims 1 to 3, wherein the voice storage equipment also stores the voice data directly transmitted from the device.

5. The voice response system according to one of claims 1 to 4, wherein the upper rank unit transmits a voice request to the voice storage equipment, and also transmits voice data to the upper rank unit according to the voice request.

6. The voice response system according to one of claims 1 to 5, wherein the upper rank system transmits a voice request to the voice output controller, and the text reader directly transmits the voice data to the upper rank unit.

7. The voice response system according to one of claims 1 to 6, wherein the device is a maintenance terminal.

8. A voice response method for transmitting data from a device based on a request from an upper rank unit, comprising steps of:
storing text data received from the device;
generating voice data from the text data received from a text storage equipment;
storing voice data from a text reader; and
transmitting a control signal to a text storage equipment and a text reader according to the control signal received from the device.

9. The voice response method according to claim 8, wherein the device is a maintenance terminal.
